(19) Europäisches Patentamt
European Patent Office
Office européen des brevets

(11) Veröffentlichungsnummer : **0 062 238**
**B1**

(12) # EUROPÄISCHE PATENTSCHRIFT

(45) Veröffentlichungstag der Patentschrift : **30.01.85**

(51) Int. Cl.⁴ : **C 07 D405/04**, A 01 N 43/40

(21) Anmeldenummer : **82102465.0**

(22) Anmeldetag : **24.03.82**

(54) **1,3-Dioxolan-Derivate, Herstellung dieser Verbindungen, fungizide Mittel, die diese Verbindungen als Wirkstoffe enthalten sowie Verwendung solcher Verbindungen bzw. Mittel zur Bekämpfung von Fungi in der Landwirtschaft und im Gartenbau.**

(30) Priorität : **30.03.81 CH 2142/81**
**11.02.82 CH 855/82**

(43) Veröffentlichungstag der Anmeldung : **13.10.82 Patentblatt 82/41**

(45) Bekanntmachung des Hinweises auf die Patenterteilung : **30.01.85 Patentblatt 85/05**

(84) Benannte Vertragsstaaten : **AT CH DE FR GB IT LI NL**

(56) Entgegenhaltungen : **DE-A- 2 123 319**

(73) Patentinhaber : **F. HOFFMANN-LA ROCHE & CO. Aktiengesellschaft**
**CH-4002 Basel (CH)**

(72) Erfinder : **Dorn, Franz, Dr.**
**Bohnackerstrasse 5**
**CH-8157 Dielsdorf (CH)**

(74) Vertreter : **Lederer, Franz, Dr. et al**
**Patentanwälte Dr. Lederer Franz Meyer-Roxlau Reiner F. Lucile-Grahn-Strasse 22**
**D-8000 München 80 (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Verbindungen der allgemeinen Formel

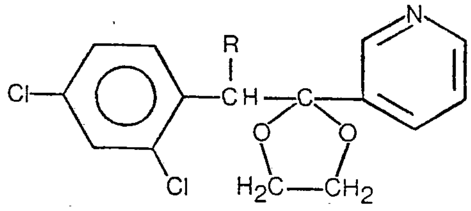

(I)

worin R Wasserstoff oder $C_{1-4}$-Alkyl bedeutet, und Säureadditionssalze dieser Verbindungen.

Die Verbindungen der Formel I und deren Säureadditionssalze besitzen fungizide Eigenschaften und eignen sich als fungizide Wirkstoffe, insbesondere zur Verwendung in der Landwirtschaft und im Gartenbau.

Die Erfindung betrifft ferner ein Verfahren zur Herstellung der Verbindungen der Formel I und ihrer Säureadditionssalze, Verbindungen der Formel I und Säureadditionssalze davon als fungizide Wirkstoffe, fungizide Mittel, die Verbindungen der Formel I oder Säureadditionssalze davon als Wirkstoffe enthalten, sowie die Verwendung solcher Verbindungen, Säureadditionssalze und Mittel zur Bekämpfung von Pilzen in der Landwirtschaft und im Gartenbau.

Der Ausdruck « $C_{1-4}$-Alkyl » in der Definition der Formel I umfasst sowohl geradkettige als auch verzweigte Alkylgruppen. Die folgenden Gruppen sind darunter zu verstehen : Methyl, Aethyl, n-Propyl, Isopropyl, n-Butyl, Isobutyl, sek-Butyl und tert-Butyl. Die geradkettigen R-Reste sind bevorzugt.

Falls R $C_{1-4}$-Alkyl bedeutet, ist dies vorzugsweise $C_{1-3}$-Alkyl, insbesondere Methyl.

Eine besonders bevorzugte Verbindung der Formel I ist das 3-[2-(2,4-Dichlorbenzyl)-1,3-dioxolan-2-yl]-pyridin.

Durch das Vorhandensein eines asymmetrischen Kohlenstoffatoms in jenen Verbindungen der Formel I, worin R $C_{1-4}$-Alkyl bedeutet, können diese Verbindungen als optische Antipoden vorliegen. Die Formel I soll demnach die optischen Isomeren sowie racemische Gemische umfassen.

Als Säureadditionssalze der Verbindungen der Formel I kommen physiologisch verträgliche Salze in Frage. Hierzu gehören vorzugsweise Salze dieser Verbindungen mit anorganischen oder organischen Säuren, wie Salzsäure ; Salpetersäure ; Phosphorsäure ; mono- und bifunktionellen Carbonsäuren und Hydroxycarbonsäuren, z. B. Essigsäure, Maleinsäure, Bernsteinsäure, Fumarsäure, Weinsäure, Zitronensäure, Salicyclsäure, Sorbinsäure und Milchsäure ; und Sulfonsäuren, z. B. 1,5-Naphthalin-disulfonsäure.

Das erfindungsgemässe Verfahren zur Herstellung der Verbindungen der Formel I und ihrer Säureadditionssalze ist dadurch gekennzeichnet, dass man ein Keton der Formel

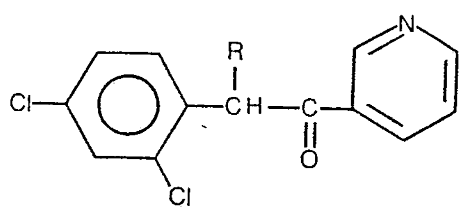

(II)

worin R die oben angegebene Bedeutung besitzt, mit Aethylenglykol umsetzt und erwünschtenfalls eine erhaltene Verbindung der Formel I in ein Säureadditionssalz überführt.

Die erfindungsgemässe Umsetzung wird zweckmassigerweise in einem organischen Lösungsmittel, in Gegenwart eines sauren Katalysators und in einem Temperaturbereich zwischen 80 °C und 140 °C durchgeführt. Als Lösungsmittel eignen sich insbesondere aromatische Kohlenwasserstoffe, z. B. Benzol, Toluol und Xylole. Solche Lösungsmittel erlauben insbesondere die kontinuierliche destillative Entfernung des gebildeten Wassers aus dem Reaktionsgemisch. Als saure Katalysatoren kommen insbesondere Mineralsäuren, wie Schwefelsäure und Salzsäure, oder Sulfonsäuren, wie p-Toluolsulfonsäure, in Frage. Da Das Ausgangsmaterial der Formel II basisch ist, wird der saure Katalysator vorteilhafterweise in geringem Ueberschuss verwendet.

Zur Herstellung der Säureadditionssalze können die erhaltenen Verbindungen der Formel I mit anorganischen oder organischen Säuren, wie Salzsäure, Salpetersäure, Phosphorsäure, mono- oder bifunktionellen Carbon- oder Hydroxycarbonsäuren, oder Sulfonsäure, umgesetzt werden. Die Salzbildung kann ohne vorhergehende Isolierung der Verbindung der Formel I aus deren Reaktionsgemisch erfolgen, oder sie kann separat bewerkstelligt werden. Im letzteren Fall dienen zweckmässigerweise als

Verdünnungs-bzw. Lösungsmittel Aethylenglykol oder ein nicht-protisches Lösungsmittel, wie ein Aether, z. B. Diäthyläther oder Tetrahydrofuran.

Die Isolierung und Reinigung der so hergestellten Verbindungen der Formel 1 bzw. der Säureadditionssalze können nach an sich bekannten Methoden erfolgen.

Die als Ausgangsmaterialien dienenden Ketone der allgemeinen Formel II können nach an sich bekannten Methoden hergestellt werden, z. B. durch Umsetzung eines Nicotinsäure-alkylesters mit einem 2,4-Dichlorphenylessigsäureester (siehe z. B. DOS 2 221 546, S. 6, 19, 21-22, 25 und 40). Vorzugsweise können die Ketone der Formel II hergestellt werden, indem man

a) ein Halogenid der allgemeinen Formel

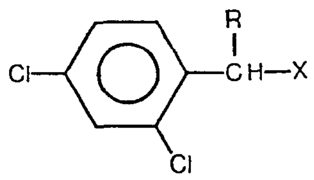

(III)

worin R die oben angegebene Bedeutung besitzt und X Chlor, Brom oder Jod bedeutet, mit einer Verbindung der allgemeinen Formel

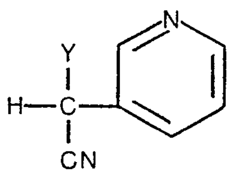

(IV)

worin Y einen disubstituierten Aminorest, z. B. Dimethylamino, Diäthylamino, Piperidino oder Morpholino, bedeutet, umsetzt und das Reaktionsprodukt, der allgemeinen Formel

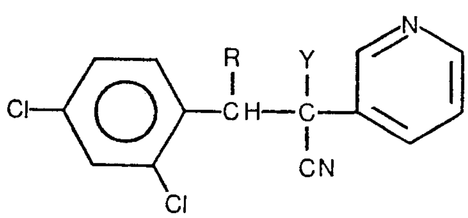

(V)

hydrolysiert, oder

b) 2,4-Dichlorbenzylcyanid (VI) mit einem (nieder Alkyl)-ester der Nicotinsäure (VII) zum α-(2,4-Dichlorphenyl)-β-hydroxy-β-(3-pyridyl)-acrylonitril (VIII) umsetzt und dieses Zwischenprodukt mit einer starken Säure behandelt, wobei das Keton der Formel II, worin R Wasserstoff bedeutet, erhalten wird, und erwünschtenfalls die letzterwähnte Verbindung mit einem Alkylierungsmittel der allgemeinen Formel

$$R^1—Z \qquad (IX)$$

worin $R^1$ $C_{1-4}$-Alkyl und Z eine Abgangsgruppe, vorzugsweise Chlor, Brom oder Jod, bedeuten, behandelt, wobei ein Keton der Formel II, worin R $C_{1-4}$-Alkyl bedeutet, erhalten wird.

Das nachstehende Reaktionsschema stellt die beiden Verfahrensvarianten a) und b) zur Herstellung der Ketone der Formel II dar ;

(Siehe Schemen Seite 4 f.)

Reaktionsschema

a)

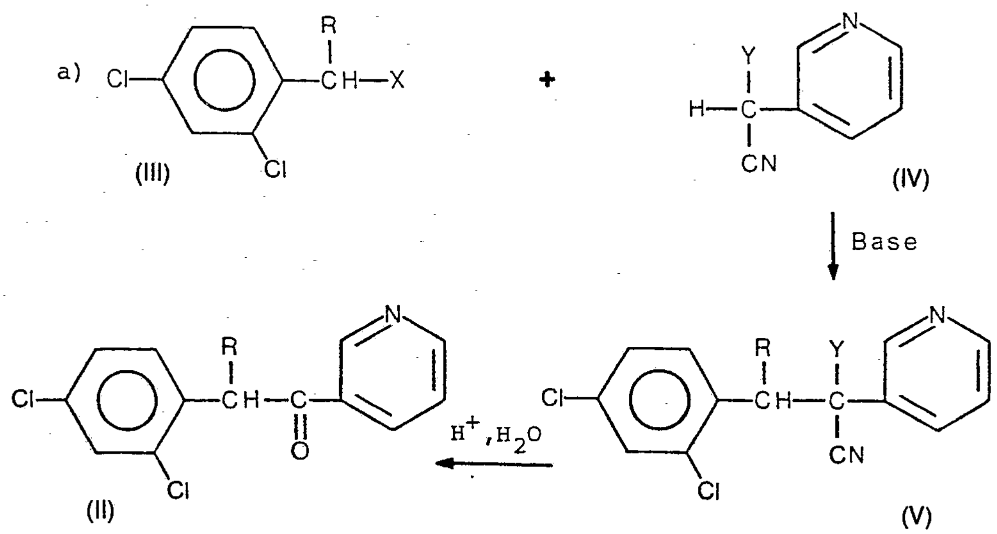


(III) (IV) (V) (II)

b)

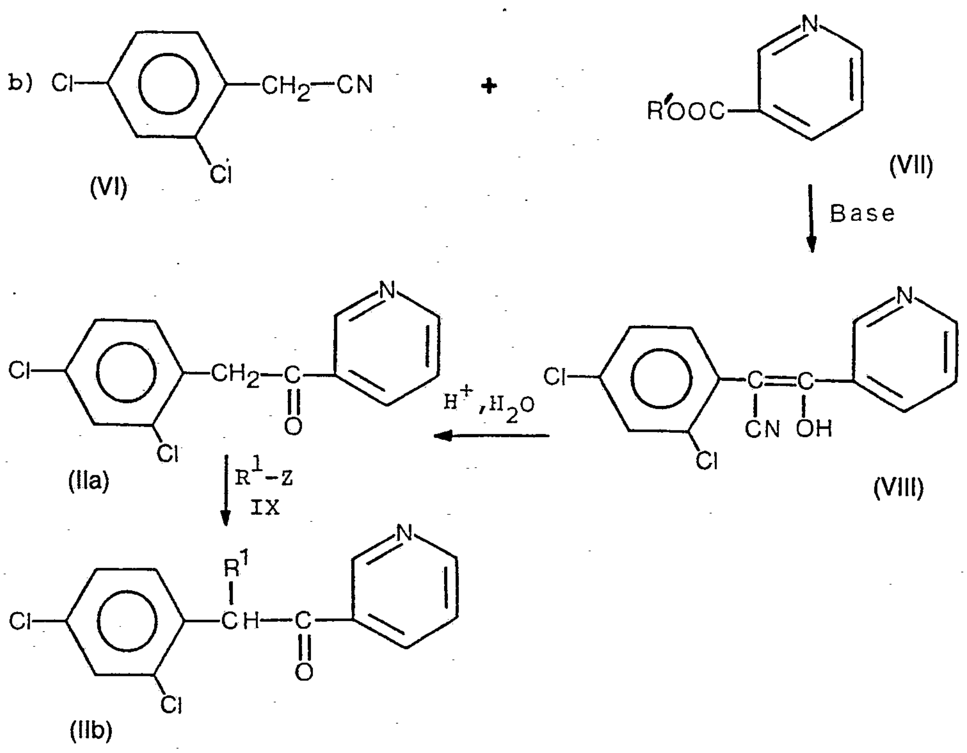


(VI) (VII) (VIII) (IIa) (IIb)

Die Umsetzung der Verbindung der Formel III mit der Verbindung der Formel IV kann z. B. unter den Bedingungen der Phasentransferkatalyse (siehe z. B. J. Dockx, Synthesis (1973), 441) bzw. unter Verwendung einer Base, wie z. B. Natriumhydrid oder Lithiumdiisopropylamid, in einem inerten Lösungsmittel, wie z. B. einen Aether, z. B. Tetrahydrofuran oder Dimethoxyäthan, in einem Temperaturbereich zwischen – 70 °C und 50 °C, vorzugsweise zwischen – 30 °C und der Raumtemperatur, und unter Ausschluss von Wasser durchgeführt werden. Das so erhaltene Zwischenprodukt der Formel V lässt sich hierauf durch Hydrolyse, z. B. durch konventionelle Behandlung mit einer wässrigen Säure, in das Keton der Formel II überführen. Als Säuren kommen für diesen Zweck insbesondere starke anorganische Säuren, wie Schwefelsäure, Chlorwasserstoffsäure und Bromwasserstoffsäure, sowie Sulfonsäuren, wie Benzolsulfonsäure und p-Toluol-sulfonsäure, in Frage. Die Hydrolyse wird zweckmässigerweise in einem Temperaturbereich zwischen 20 °C und der Rückflusstemperatur des Reaktionsgemisches, vorzugsweise zwischen 80 °C und 100 °C, ausgeführt.

In dem gemäss der Verfahrensvariante b) verwendeten Ausgangsmaterial der Formel VII steht R vorzugsweise für $C_{1-4}$-Alkyl, insbesondere Aethyl. Die Umsetzung der Verbindungen der Formeln VI und

VII wird in Gegenwart einer Base, vorzugsweise Natriumäthylat, zweckmässigerweise in einem organischen Verdünnungsmittel, wie Aethanol, Benzol oder Toluol, durchgeführt. Das so erhaltene Zwischenprodukt der Formel VIII wird hierauf durch Behandeln mit einer starken Säure, wie Schwefelsäure, Salzsäure oder einer Sulfonsäure, z. B. Methansulfonsäure oder p-Toluol-sulfonsäure, in Gegenwart von Wasser in das Keton der Formel IIa übergeführt.

Bei der Alkylierung des Ketons der Formel IIa zu einem Keton der Formel IIb wird wird mit Vorteil das ersterwähnte Keton mit einer Base wie Natriumhydrid oder Lithiumdiisopropylamid in einem Verdünnungsmittel, vorzugsweise einem aprotischen organischen Lösungsmittel, wie Tetrahydrofuran, Dimethoxyäthan oder Dimethylformamid, bei Reaktionstemperaturen zwischen – 70 °C und 50 °C in ein Anion übergeführt, welches dann mit dem Alkylierungsmittel der Formel IX versetzt wird.

Die Isolierung und eventuelle Reinigung der so erhaltenen Zwischenprodukte bzw. Ausgangsmaterialien können nach an sich bekannten Methoden durchgeführt werden.

Die erfindungsgemässen Verbindungen, d. h. Verbindungen der Formel I und deren Säureadditionssalze, besitzen fungizide Wirkung und können dementsprechend zur Bekämpfung von Fungi in der Landwirtschaft und im Gartenbau Verwendung finden. Sie eignen sich insbesondere zur Vernichtung oder Eindämmung von phytopathogenen Pilzen auf Pflanzenteilen, z. B. Blättern, Stengeln, Wurzeln, Knollen, Früchten oder Blüten, und auf Saatgut sowie im Erdboden und sind besonders wirksam bei der Bekämpfung von Botrytis cinerea (Graufäule) ; von echten Mehltaupilzen, wie beispielsweise Uncinula necator (Rebenmehltau), Erysiphe cichoracearum (Gurkenmehltau), Podosphaera leucotricha (Apfelmehltau) und Erysiphe graminis (Gerstenmehltau) ; von Venturia inaequalis (Apfelschorf) ; von Helminthosporium oryzae (Braunfleckenkrankheit von Reis) ; und von Schadpilzen der Gattungen Puccinia, Uromyces, Rhizoctonia, Penicillium, Septoria und Cercospora.

Einzelne Vertreter der erfindungsgemässen Verbindungen besitzen zudem eine ausgeprägte Wirkung gegen holzzerstörende Pilze, wie z. B. Coniophora puteana und Gloephyllum trabeum.

Die erfindungsgemässen Verbindungen zeichnen sich durch lokale und bzw. oder systemische Wirkung aus.

Die erfindungsgemässen Verbindungen wirken unter Gewächshausbedingungen bereits bei einer Konzentration von 10 mg bis 500 mg Wirksubstanz pro Liter Spritzbrühe. Im Freiland werden vorteilhaft Konzentrationen von 100 g bis 2 000 g Wirkstoff der Formel I pro Hektar und Behandlung zur Anwendung gebracht.

Die erfindungsgemässen Verbindungen können in verschiedenartigen Mitteln, z. B. Spritzbrühen, wässrigen Suspensionen, Emulsionen, emulgierbaren Konzentraten und pulverförmigen Präparaten, formuliert werden. Die erfindungsgemässen fungiziden Mittel sind dadurch gekennzeichnet, dass sie eine wirksame Menge mindestens einer Verbindung der allgemeinen Formel I, wie oben definiert, oder eines Säureadditionssalzes einer solchen Verbindung sowie inertes Trägermaterial enthalten. Diese Mittel können hergestellt werden, indem man eine erfindungsgemässe Verbindung mit inertem Trägermaterial vermischt.

Im allgemeinen enthält ein Mittel, je nach dessen Art, zwischen 0,000 1 und 95 Gewichtsprozent an erfindungsgemässer Verbindung bzw. erfindungsgemässen Verbindungen als Wirkstoff(en).

Zur Herstellung von pulverförmigen Präparaten kommen verschiedene inerte pulverförmige Trägerstoffe in Frage, wie z. B. Kaolin, Bentonit, Talkum, Schlämmkreide, Magnesiumcarbonat und Kieselgur. Die aktiven Komponenten werden mit solchen Trägerstoffen vermischt, z. B. durch Zusammenmahlen ; oder man imprägniert den inerten Trägerstoff mit einer Lösung der aktiven Komponenten und entfernt dann das Lösungsmittel durch Abdunsten, Erhitzen oder durch Absaugen unter vermindertem Druck. Solche pulverförmigen Präparate können als Stäubemittel mit Hilfe der üblichen Verstäubergeräte auf die zu schützenden Pflanzen aufgebracht werden. Durch Zusatz von Netz- und/oder Dispergiermitteln kann man solche pulverförmigen Präparate mit Wasser leicht benetzbar machen, so dass sie in Form von wässrigen Suspensionen als Spritzmittel anwendbar sind.

Zur Herstellung emulgierbarer Konzentrate können die aktiven Stoffe beispielsweise mit einem Emulgiermittel gemischt oder auch in einem inerten Lösungsmittel gelöst und mit einem Emulgator gemischt werden. Durch Verdünnen solcher Konzentrate mit Wasser erhält man gebrauchsfertige Emulsionen. Derartige Konzentrate können 5 bis 95 Gewichtsprozent, insbesondere 25 bis 75 Gewichtsprozent, Wirkstoff enthalten.

Die erfindungsgemässen fungiziden Mittel können neben den Wirkstoffen der Formel I auch andere Wirkstoffe enthalten, z. B. anderweitige fungizide Mittel, insektizide und akarizide Mittel, Bakterizide, Pflanzenwachstumsregulatoren und Düngemittel. Solche Kombinationsmittel eignen sich zur Verbreiterung des Wirkungsspektrums oder zur spezifischen Beeinflussung des Pflanzenwachstums.

Die Verwendung der erfindungsgemässen Mittel kann nach den im Pflanzenschutz bzw. in der Landwirtschaft üblichen Applikationsmethoden erfolgen. Das erfindungsgemässe Verfahren zur Bekämpfung von Fungi ist dadurch gekennzeichnet, dass man das zu schützende Gut, z. B. Pflanzen, Pflanzenteile bzw. Samen, mit einer wirksamen Menge einer erfindungsgemässen Verbindung bzw. eines erfindungsgemässen Mittels behandelt.

Die nachstehenden Beispiele illustrieren die Erfindung. Alle Temperaturen sind in °C angegeben.

## I. Herstellung der Wirkstoffe

Beispiel 1

2,25 g 2,4-Dichlorbenzyl-3-pyridyl-keton, 2,2 g p-Toluolsulfonsäuremonohydrat und 1,0 g Aethylenglykol werden zusammen mit 20 ml Xylol während 24 Stunden zum Sieden erhitzt, wobei das entstehende Wasser in einem Wasserabscheider abgetrennt wird. Dann wird abgekühlt, das Reaktionsgemisch auf 2n Natronlauge gegossen, mit Diäthyläther extrahiert, die organische Phase über wasserfreiem Natriumsulfat getrocknet und das Lösungsmittel unter vermindertem Druck entfernt. Das Rohprodukt wird durch Chromatographie an Kieselgel mit n-Hexan/Essigester (1 : 1) gereinigt. Das so erhaltene 3-[2-(2,4-Dichlorbenzyl)-1,3-dioxolan-2-yl]-pyridin schmilzt bei 76-78°.

Beispiel 2

2 g 2-(2,4-Dichlorphenyl)-1-(3-pyridyl)-1-propanon werden in 80 ml Toluol gelöst. Nach Hinzufügen von 1,05 g konzentrierter Schwefelsäure und 1,02 g Aethylenglykol wird das Reaktionsgemisch zum Sieden erhitzt. Das im Verlaufe der Reaktion entstehende Wasser wird mittels eines Wasserabscheiders abgetrennt. Nach 4, 7 und 12 Stunden Reaktionsdauer werden jeweils nochmals 1,5 g Aethylenglykol zugegeben. Nach 15 Stunden wird abgekühlt, die Toluolphase verworfen, die untere zähflüssige Phase mit 50 ml Methylenchlorid verdünnt und anschliessend auf 37,5 ml 1n Natronlauge gegossen. Dann wird mit Methylenchlorid nachextrahiert, die organische Phase gewaschen und über wasserfreiem Natriumsulfat getrocknet. Nach Entfernen des Lösungsmittels erhält man das 3-[2,4-Dichlor-α-methylbenzyl)-1,3-dioxolan-2-yl]-pyridin als bräunliches, hochviskoses Oel.

II. Herstellung der Ausgangsmaterialien

Beispiel 3

Zu einem Gemisch von 700 g 50 %iger Natronlauge, 23 g Tetrabutylammoniumjodid und 130 g α-(3-Pyridyl)-4-morpholinacetonitril werden bei Raumtemperatur 125 g 2,4-Dichlorbenzylchlorid zugegeben. Nach 2 Stunden wird mit Diäthyläther extrahiert. Nach Abdampfen des Aethers bleibt das Rohprodukt α-(2,4-Dichlorbenzyl)-α-(3-pyridyl)-4-morpholin-acetonitril (Smp. 130-132°) zurück. Dieses wird im 300 ml konzentrierter Salzsäure aufgenommen und die Lösung 12 Stunden auf Rückflusstemperatur erwärmt. Dann wird basisch gestellt, mit Essigester extrahiert, die organische Phase gewaschen, über wasserfreiem Natriumsulfat getrocknet und eingeengt. Aus Essigester/n-Hexan erhält man das 2,4-Dichlorbenzyl-3-pyridyl-keton, Smp. 78-79°.

Auf analoge Weise erhält man :

Aus α-(3-Pyridyl)-4-morpholinacetonitril und 1-(2,4-Dichlorphenyl)-1-bromäthan über das Isomerengemisch von α-(2,4-Dichlor-α-methyl-benzyl)-α-(3-pyridyl)-4-morpholinacetonitril das 2-(2,4-Dichlorphenyl)-1-(3-pyridyl)-1-propanon als Oel.

Beispiel 4

Zu einer siedenden Lösung von 48,3 g Natrium in 1 055 ml Aethanol wird während 3 1/2 Stunden eine Lösung von 303,7 g 2,4-Dichlorbenzylcyanid in 373,6 g Nicotinsäureäthylester zugetropft. Dann wird weitere 5 Stunden auf Rücktlusstemperatur erhitzt, 16 Stunden bei Raumtemperatur gerührt, auf Eiswasser gegossen, mit Diäthyläther gewaschen und anschliessend zur wässerigen Phase 205 ml Essigsäure zugefügt, wobei Kristalle von α-(2,4-Dichlorphenyl)-β-hydroxy-β-(3-pyridyl)-acrylonitril ausfallen. Diese werden abgetrennt, mit Wasser und Diäthyläther gewaschen und dann getrocknet. Der Schmelzpunkt des so gereinigten Produktes beträgt 187-188°.

Diese Kristalle (286,8 g) gibt man portionenweise zu 1,050 kg 75 %iger Schwefelsäure. Das Gemisch wird während 3 1/2 Stunden auf 100-120° erhitzt, dann abgekühlt, auf Wasser gegossen, durch Zugabe von Ammoniak auf pH 9 eingestellt und die entstandenen Kristalle abgenutscht. Nach Waschen mit Wasser und n-Hexan und Trocknen bei 40°/16 Torr erhält man Kristalle von 2,4-Dichlorbenzyl-3-pyridylketon, Smp. 75-76°.

Beispiel 5

28 g 2,4-Dichlorbenzyl-3-pyridyl-keton werden in 800 ml Dimethylformamid gelöst und bei 0° portionenweise mit 5,5 g Natriumhydrid (50 %ige Dispersion in Oel) versetzt. Nach 2 Stunden bei Raumtemperatur wird 14,9 g Methyljodid zugefügt und weitere 3 Stunden bei Raumtemperatur gerührt. Dann wird auf Wasser gegossen, mit Diäthyläther extrahiert, die organische Phase gewaschen und über wasserfreiem Natriumsulfat getrocknet und anschliessend eingeengt. Durch Chromatographie an Kieselgel mit n-Hexan/Essigester (1 : 2) erhält man das 2-(2,4-Dichlorphenyl)-1-(3-pyridyl)-1-propanon als Oel.

Auf analoge Weise erhält man :

Aus 2,4-Dichlorbenzyl-3-pyridyl-keton und Aethylbromid das 2-(2,4-Dichlorphenyl)-1-(3-pyridyl)-1-butanon als Oel.

III. Formulierungsbeispiele

Beispiel 6

1. Spritzpulver (für flüssige oder unter 75° schmelzende Wirkstoffe)

| | Gewichtsteile |
|---|---|
| Wirkstoff der Formel I | 50 |
| Hydratisierte Kieselsäure | 37 |
| Kaolin | 5 |
| Alkylphenoläthoxylat | 4 |
| Natrium-polynaphthalinsulfonat | 4 |
| | 100 |

Der flüssige oder geschmolzene Wirkstoff wird auf die Kieselsäure aufgezogen, die übrigen Komponenten zugemischt und das Ganze in einer geeigneten Mühle feingemahlen.

2. Spritzpulver (für feste, über 75° schmelzende Wirkstoffe)

| | Gewichtsteile |
|---|---|
| Wirkstoff der Formel I | 50 |
| Hydratisierte Kieselsäure | 5 |
| Kaolin | 42 |
| Natrium-laurylsulfat | 1 |
| Natrium-lignosulfonat | 2 |
| | 100 |

Die Komponenten werden miteinander vermischt und das Ganze in einer geeigneten Mühle feingemahlen.

3. Emulgierbares Konzentrat (für bei 20-25° flüssige Wirkstoffe)

| | Gewichtsteile |
|---|---|
| Wirkstoff der Formel I | 500 |
| Ricinusöl-acetoxylat | 100 |
| Calcium-dodecylbenzolsulfonat | 25 |
| Gemisch von $C_{10}$-Alkylbenzolen | ad 1 000 Vol.-Teile |

Die Komponenten werden miteinander vermischt, bis eine klare Lösung entsteht.

**Ansprüche** (für die Vertragsstaaten : CH, DE, FR, GB, IT, LI, NL)

1. Verbindungen der allgemeinen Formel

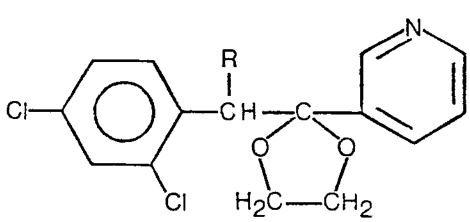

(I)

worin R Wasserstoff oder $C_{1-4}$-Alkyl bedeutet, und Säureadditionssalze dieser Verbindungen.

2. 3-[2-(2,4-Dichlorbenzyl)-1,3-dioxolan-2-yl]-pyridin.

3. 3-[2-(2,4-Dichlor-α-methyl-benzyl)-1,3-dioxolan-2-yl]-pyridin.

4. Verbindungen nach einem der Ansprüche 1 bis 3 als fungizide Wirkstoffe.

5. Fungizides Mittel, dadurch gekennzeichnet, dass es eine wirksame Menge mindestens einer Verbindung der allgemeinen Formel

(Siehe Schema Seite 8 f.)

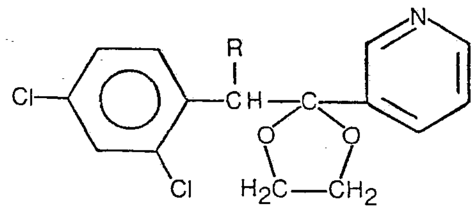

(I)

worin R Wasserstoff oder $C_{1-4}$-Alkyl bedeutet, oder eines Säureadditionssalzes einer solchen Verbindung, sowie inertes Trägermaterial enthält.

6. Fungizides Mittel nach Anspruch 5, dadurch gekennzeichnet, dass es eine wirksame Menge von 3-[2-(2,4-Dichlorbenzyl)-1,3-dioxolan-2-yl]-pyridin sowie inertes Trägermaterial enthält.

7. Verfahren zur Herstellung von Verbindungen der allgemeinen Formel

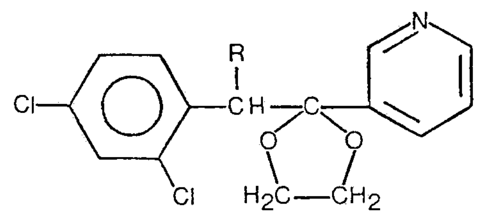

(I)

worin R Wasserstoff oder $C_{1-4}$-Alkyl bedeutet, und von deren Säureadditionssalzen, dadurch gekennzeichnet, dass man ein Keton der Formel

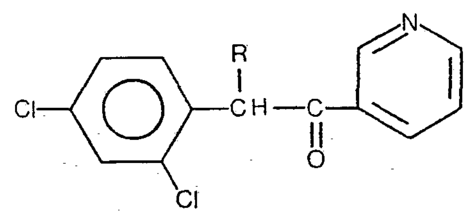

(II)

worin R die oben angegebene Bedeutung besitzt, mit Aethylenglykol umsetzt und erwünschtenfalls eine erhaltene Verbindung der Formel I in ein Säureadditionssalz überführt.

8. Verfahren nach Anspruch 7, dadurch gekennzeichnet, dass man 2,4-Dichlorbenzyl-3-pyridyl-keton mit Aethylenglykol zum 3-[2-(2,4-Dichlorbenzyl)-1,3-dioxolan-2-yl]-pyridin umsetzt.

9. Verfahren zur Bekämpfung von Fungi in der Landwirtschaft und im Gartenbau, dadurch gekennzeichnet, dass man das zu schützende Gut mit einer wirksamen Menge mindestens einer der in den Ansprüchen 1 bis 3 genannten Verbindungen bzw. eines in Anspruch 5 oder 6 genannten Mittels behandelt.

10. Verwendung einer der in den Ansprüchen 1 bis 3 genannten Verbindungen bzw. eines der in Anspruch 5 oder 6 genannten Mittels zur Bekämpfung von Fungi in der Landwirtschaft und im Gartenbau.

**Ansprüche** (für den Vertragsstaat AT)

1. Fungizides Mittel, dadurch gekennzeichnet, dass es eine wirksame Menge mindestens einer Verbindung der allgemeinen Formel

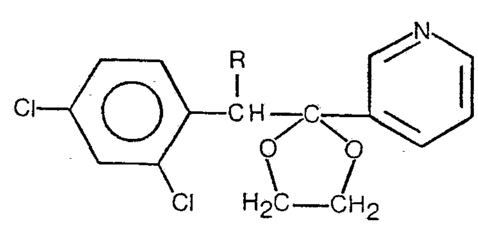

(I)

worin R Wasserstoff oder $C_{1-4}$-Alkyl bedeutet, oder eines Säureadditionssalzes einer solchen Verbindung, sowie inertes Trägermaterial enthält.

2. Fungizides Mittel nach Anspruch 1, dadurch gekennzeichnet, dass es eine wirksame Menge von 3-[2-(2,4-Dichlorbenzyl)-1,3-dioxolan-2-yl]-pyridin sowie inertes Trägermaterial enthält.

3. Fungizides Mittel nach Anspruch 1, dadurch gekennzeichnet, dass es eine wirksame Menge von 3-[2-(2,4-Dichlor-α-methyl-benzyl)-1,3-dioxolan-2-yl]-pyridin sowie inertes Trägermaterial enthält.

4. Verfahren zur Herstellung von Verbindungen der allgemeinen Formel

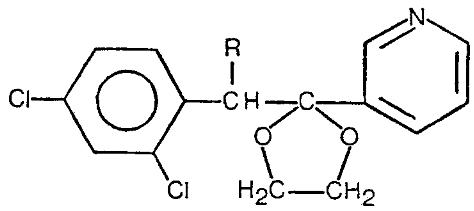

(I)

worin R Wasserstoff oder $C_{1-4}$-Alkyl bedeutet, und von deren Säureadditionssalzen, dadurch gekennzeichnet, dass man ein Keton der Formel

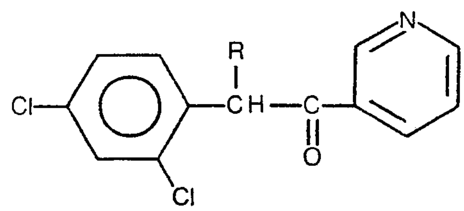

(II)

worin R die oben angegebene Bedeutung besitzt, mit Aethylenglykol umsetzt und erwünschtenfalls eine erhaltene Verbindung der Formel I in ein Säureadditionssalz überführt.

5. Verfahren nach Anspruch 4, dadurch gekennzeichnet, dass man 2,4-Dichlorbenzyl-3-pyridyl-keton mit Aethylenglykol zum 3-[2-(2,4-Dichlorbenzyl)-1,3-dioxolan-2-yl]-pyridin umsetzt.

6. Verfahren zur Herstellung eines fungiziden Mittels, dadurch gekennzeichnet, dass man eine in Anspruch 1 oder 3 genannte Verbindung mit inertem Trägermaterial vermischt.

7. Verfahren zur Herstellung eines fungiziden Mittels, dadurch gekennzeichnet, dass man 3-[2-(2,4-Dichlorbenzyl)-1,3-dioxolan-2-yl]-pyridin mit inertem Trägermaterial vermischt.

8. Verfahren zur Bekämpfung von Fungi in der Landwirtschaft und im Gartenbau, dadurch gekennzeichnet, dass man das zu schützende Gut mit einer wirksamen Menge mindestens einer der in Anspruch 1 oder 3 genannten Verbindung bzw. eines in Anspruch 1 oder 3 genannten Mittels behandelt.

9. Verfahren zur Bekämpfung von Fungi in der Landwirtschaft und im Gartenbau, dadurch gekennzeichnet, dass man das zu schützende Gut mit einer wirksamen Menge von 3-[2-(2,4-Dichlorbenzyl)-1,3-dioxolan-2-yl]-pyridin bzw. eines diese Verbindung enthaltenden fungiziden Mittels behandelt.

10. Verwendung einer der in Anspruch 1 oder 3 genannten Verbindung bzw. eines in Anspruch 1 oder 3 genannten Mittels zur Bekämpfung von Fungi in der Landwirtschaft und im Gartenbau.

11. Verwendung von 3-[2-(2,4-Dichlorbenzyl)-1,3-dioxolan-2-yl]-pyridin bzw. eines diese Verbindung enthaltenden fungiziden Mittels zur Bekämpfung von Fungi in der Landwirtschaft und im Gartenbau.

**Claims** (for the Contracting States : CH, DE, FR, GB, IT, LI, NL)

1. Compounds of the general formula

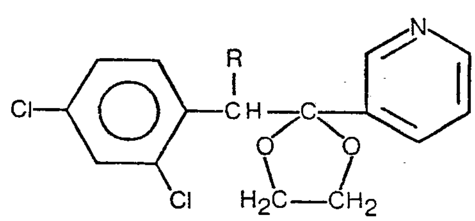

(I)

wherein R signifies hydrogen or $C_{1-4}$-alkyl, and acid addition salts of these compounds.

2. 3-[2-(2,4-Dichlorobenzyl)-1,3-dioxolan-2-yl]-pyridine.

3. 3-[2-(2,4-Dichloro-α-methyl-benzyl)-1,3-dioxolan-2-yl]-pyridine.

4. Compounds according to any one of claims 1 to 3 as fungicidal active substances.

5. A funcigicidal composition, characterized in that it contains an effective amount of at least one compound of the general formula

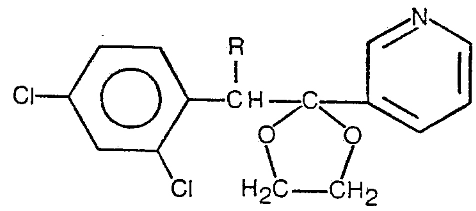

(I)

wherein R signifies hydrogen or $C_{1-4}$-alkyl, or an acid addition salt of such a compound, as well as inert carrier material.

6. A fungicidal composition according to claim 5, characterized in that it contains an effective amount of 3-[2-(2,4-dichlorobenzyl)-1,3-dioxolan-2-yl]-pyridine as well as inert carrier material.

7. A process for the manufacture of compounds of the general formula

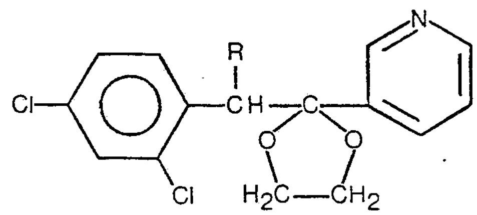

(I)

wherein R signifies hydrogen or $C_{1-4}$-alkyl, and of their acid addition salts, characterized by reacting a ketone of the formula

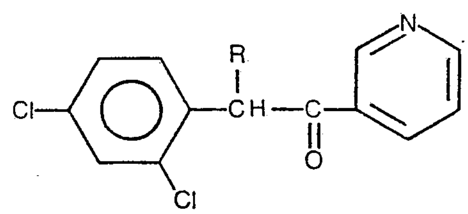

(II)

wherein R has the significance given above, with ethylene glycol and, if desired, converting a compound of formula I obtained into an acid addition salt.

8. A process according to claim 7, characterized in that 2,4-dichlorobenzyl 3-pyridyl ketone is reacted with ethylene glycol to give 3-[2-(2,4-dichlorobenzyl)-1,3-dioxolan-2-yl]-pyridine.

9. A method for the control of fungi in agriculture and in horticulture, characterized by treating the locus to be protected with an effective amount of at least one of the compounds set forth in claims 1 to 3 or of a composition set forth in claim 5 or 6.

10. The use of one of the compounds set forth in claims 1 to 3 or of one of the compositions set forth in claim 5 or 6 for the control of fungi in agriculture and in horticulture.

**Claims** (for the Contracting State AT)

1. A fungicidal composition, characterized in that it contains an effective amount of at least one compound of the general formula

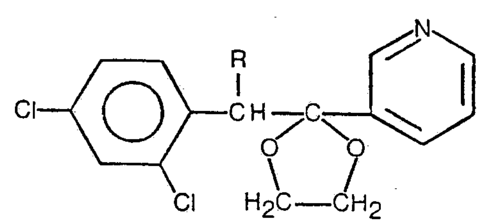

(I)

wherein R signifies hydrogen or $C_{1-4}$-alkyl, or an acid addition salt of such a compound, as well as inert carrier material.

2. A fungicidal composition according to claim 1, characterized in that it contains an effective amount of 3-[2-(2,4-dichlorobenzyl)-1,3-dioxolan-2-yl]-pyridine as well as inert carrier material.

3. A fungicidal composition according to claim 1, characterized in that it contains an effective amount of 3-[2-(2,4-dichloro-α-methyl-benzyl)-1,3-dioxolan-2-yl]-pyridine as well as inert carrier material.

4. A process for the manufacture of compounds of the general formula

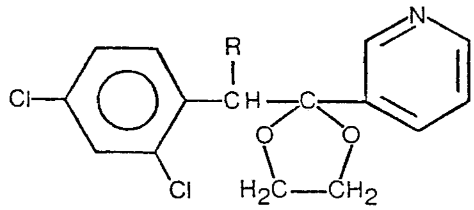

(I)

wherein R signifies hydrogen or $C_{1-4}$-alkyl, and of their acid addition salts, characterized by reacting a ketone of the formula

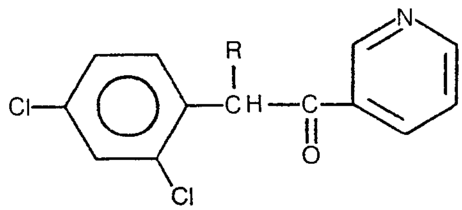

(II)

wherein R has the significance given above, with ethylene glycol and, if desired, converting a compound of formula I obtained into an acid addition salt.

5. A process according to claim 4, characterized in that 2,4-dichlorobenzyl 3-pyridyl ketone is reacted with ethylene glycol to give 3-[2-(2,4-dichlorobenzyl)-1,3-dioxolan-2-yl]-pyridine.

6. A process for the manufacture of a fungicidal composition, characterized by mixing a compound set forth in claim 1 or 3 with inert carrier material.

7. A process for the manufacture of a fungicidal composition, characterized by mixing 3-[2-(2,4-dichlorobenzyl)-1,3-dioxolan-2-yl]-pyridine with inert carrier material.

8. A method for the control of fungi in agriculture and in horticulture, characterized by treating the locus to be protected with an effective amount of at least one of the compounds set forth in claim 1 or 3 of a composition set forth in claim 1 or 3.

9. A method for the control of fungi in agriculture and in horticulture, characterized by treating the locus to be protected with an effective amount of 3-[2-(2,4-dichlorobenzyl)-1,3-dioxolan-2-yl]-pyridine or of a fungicidal composition containing this compound.

10. The use of one the compounds set forth in claim 1 or 3 or of a composition set forth in claim 1 or 3 for the control of fungi in agriculture and in horticulture.

11. The use of 3-[2-(2,4-dichlorobenzyl)-1,3-dioxolan-2-yl]-pyridine or of a fungicidal composition containing this compound for the control of fungi in agriculture and in horticulture.

**Revendications** (pour les Etats contractants : CH, DE, FR, GB, IT, LI, NL)

1. Composés de formule générale

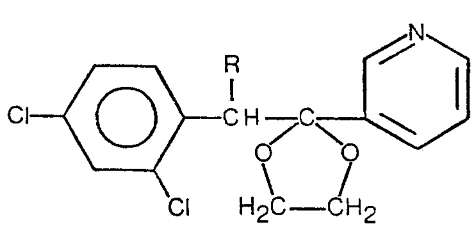

(I)

dans laquelle R représente l'hydrogène ou un groupe alkyle en $C_1$-$C_4$, et les sels de ces composés formés par addition avec des acides.

2. La 3-[2-(2,4-dichlorobenzyl)-1,3-dioxolane-2-yl]-pyridine.

3. La 3-[2-(2,4-dichloro-α-méthyl-benzyl)-1,3-dioxolane-2-yl]-pyridine.

4. Composés selon l'une des revendications 1 à 3 en tant qu'agents actifs fongicides.

5. Produit fongicide caractérisé en ce qu'il contient une quantité efficace d'au moins un composé de formule générale :

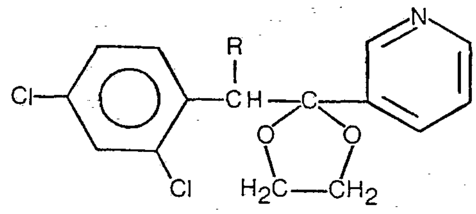

(I)

dans laquelle R représente l'hydrogène ou un groupe alkyle en $C_1$-$C_4$, ou d'un sel d'un tel composé formé par addition avec un acide, ainsi qu'un véhicule inerte.

6. Produit fongicide selon la revendication 5, caractérisé en ce qu'il contient une quantité efficace de 3-[2-(2,4-dichlorobenzyl)-1,3-dioxolane-2-yl]-pyridine et un véhicule inerte.

7. Procédé de préparation des composés de formule générale

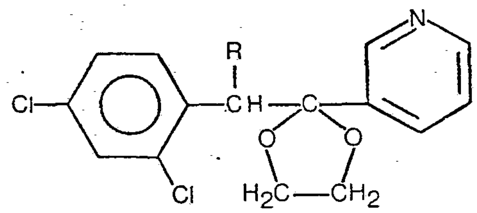

(I)

dans laquelle R représente l'hydrogène ou un groupe alkyle en $C_1$-$C_4$, et de leurs sels formés par addition avec des acides, caractérisé en ce que l'on fait réagir une cétone de formule

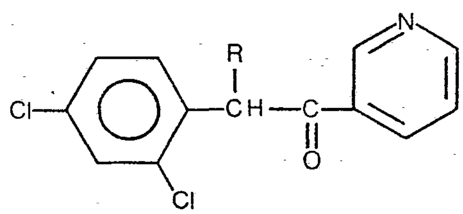

(II)

dans laquelle R a la signification indiquée ci-dessus, avec l'éthylène-glycol, et si on le désire, on convertit un composé obtenu répondant à la formule I en un sel par addition avec un acide.

8. Procédé selon la revendication 7, caractérisé en ce que l'on prépare la 3-[2-(2,4-dichlorobenzyl)-1,3-dioxolane-2-yl]-pyridine par réaction de la 2,4-dichlorobenzyl-3-pyridilcétone avec l'éthylène-glycol.

9. Procédé pour combattre les champignons en agriculture et en horticulture, caractérisé en ce que l'on traite le produit à protéger par une quantité efficace d'au moins un des composés des revendications 1 à 3 ou d'un produit de la revendication 5 ou 6.

10. Utilisation de l'un des composés selon les revendications 1 à 3 ou d'un produit selon la revendication 5 ou 6 pour combattre les champignons dans l'agriculture et dans l'horticulture.

**Revendications** (pour l'Etat Contractant AT)

1. Produit fongicide caractérisé en ce qu'il contient une quantité efficace d'au moins un composé de formule générale

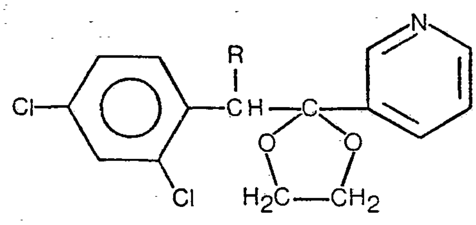

(I)

dans laquelle R représente l'hydrogène ou un groupe alkyle en $C_1$-$C_4$, ou d'un sel d'un tel composé formé par addition avec un acide ainsi un véhicule inerte.

2. Produit fongicide selon la revendication 1, caractérisé en ce qu'il contient une quantité efficace de 3-[2-(2,4-dichlorobenzyl)-1,3-dioxolane-2-yl]-pyridine et un véhicule inerte.

3. Produit fongicide selon la revendication 1, caractérisé en ce qu'il contient une quantité efficace de 3-[2-2,4-dichloro-α-méthylbenzyl)-1,3-dioxolane-2-yl]-pyridine et un véhicule inerte.

4. Procédé de préparation des composés de formule générale

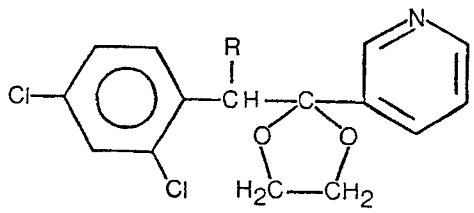

(I)

dans laquelle R représente l'hydrogène ou un groupe alkyle en $C_1$-$C_4$, et de leurs sels formés par addition avec des acides, caractérisé en ce que l'on fait réagir une cétone de formule

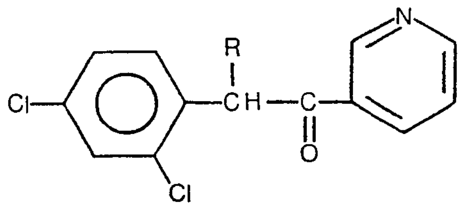

(II)

dans laquelle R a la signification indiquée ci-dessus, avec l'éthylène-glycol, et si on le désire, on convertit un composé obtenu répondant à la formule I en un sel par addition avec un acide.

5. Procédé selon la revendication 4, caractérisé en ce que l'on prépare la 3-[2-(2,4-dichloro-benzyl)-1,3-dioxolane-2-yl]-pyridine par réaction de la 2,4-dichlorobenzyl-3-pyridilcétone avec l'éthylèneglycol.

6. Procédé de préparation d'un produit fongicide, caractérisé en ce que l'on mélange un composé selon la revendication 1 ou 3 avec un véhicule inerte.

7. Procédé de préparation d'un produit fongicide caractérisé en ce que l'on mélange la 3-[2-(2,4-dichlorobenzyl)-1,3-dioxolane-2-yl]-pyridine avec un véhicule inerte.

8. Procédé pour combattre les champignons dans l'agriculture et l'horticulture, caractérisé en ce que l'on traite le produit à protéger par une quantité efficace d'au moins un des composés selon la revendication 1 ou 3 ou d'un produit selon la revendication 1 ou 3.

9. Procédé pour combattre les champignons en agriculture et horticulture, caractérisé en ce que l'on traite le produit à protéger par une quantité efficace de 3-[2-(2,4-dichlorobenzyl)-1,3-dioxolane-2-yl]-pyridine ou d'un produit fongicide contenant ce composé.

10. Utilisation d'un composé selon la revendication 1 ou 3, ou d'un produit selon la revendication 1 ou 3 pour la lutte contre les champignons en agriculture et horticulture.

11. Utilisation de la 3-[2-(2,4-dichloro-benzyl)-1,3-dioxolane-2-yl]-pyridine ou d'un produit fongicide contenant ce composé pour la lutte contre les champignons en agriculture et horticulture.